# EUROPÄISCHE PATENTSCHRIFT

(11) **EP 1 927 803 B1**
(45) Veröffentlichungstag und Bekanntmachung des Hinweises auf die Patenterteilung: **05.01.2011**
(21) Anmeldenummer: 07017254.9
(22) Anmeldetag: 04.09.2007
(51) Int. Cl.: F16L 11/15

(54) **Flexibles Leitungselement für innendruckbeaufschlagte Leitungen**
Flexible conduit element for conduits under internal pressure
Elément de conduite flexible pour des conduites alimentées par pression interne

(30) Priorität: 10.11.2006 DE 202006017190 U
(43) Veröffentlichungstag der Anmeldung: 04.06.2008
(73) Patentinhaber: Witzenmann GmbH, 75175 Pforzheim (DE)
(72) Erfinder: Burckhardt, Carlo, Dr., 75331 Grunbach (DE)
(74) Vertreter: Lemcke, Brommer & Partner

(56) Entgegenhaltungen:
- DE-A1- 3 344 544
- DE-A1- 19 919 715
- DE-C1- 19 531 796
- BURKHARDT C: "FLEXIBLE A/C HOSES FOR CO2-SYSTEMS" SAE AUTOMOTIVE ALTERNATE REFRIGERANT SYSTEMS SYMPOSIUM, XX, XX, 1. Juli 2002 (2002-07-01), Seiten 1-25, XP001169123

## Beschreibung

Die Erfindung betrifft ein flexibles Leitungselement für innendruckbeaufschlagte Leitungen, insbesondere für mit CO₂ betriebene Klimaanlagen von Kraftfahrzeugen, wobei das Leitungselement für Innendrücke in der Größenordnung von 200 bar ausgelegt und an beiden Enden mit Anschlussteilen zur Verbindung mit weiterführenden Bauteilen versehen ist, wobei das Leitungselement einen inneren fluiddichten und mit Anschlussteilen versehenen Wellschlauch aus Metall aufweist und wobei der Wellschlauch zumindest mittelbar mit einem Axialabstützungselement zusammenwirkt, wobei das Axialabstützungselementaus einem flexiblen Geflechtsschlauch aus sich kreuzenden Metalldrähten besteht, der zumindest mittelbar an den Anschlussteilen festgelegt ist und koaxial zum Wellschlauch auf dessen radialer Außenseite verläuft, und wobei der Geflechtsschlauch zumindest in Teilbereichen spielfrei am Wellschlauch auf dessen radialer Außenseite anliegt.

Ein bekanntes flexibles Leitungselement für CO₂-Klimaanlagen ist in der EP-A-1 048 881 offenbart, bei der ein Wellschlauch mit einem Axialabstützungselement in Form eines gewickelten Metallschlauchs sowie einer den Zwischenraum zwischen Wellschlauch und gewickeltem Metallschlauch spielfrei ausfüllenden Zwischenlage aus druckfestem und temperaturbeständigem Kunststoff zusammenwirkt. Hierdurch wird der Wellschlauch sowohl in radialer als auch in axialer Richtung derart abgestützt, dass er den bei CO₂-Klimaanlagen üblichen Betriebsdrücken von bis zu 200 bar Stand halten kann, obwohl er dies alleine ohne die Radial- und Axialabstützung nicht könnte. Hierdurch stellt das bekannte Leitungselement ein Bauteil dar, das einerseits für hohe Drücke geeignet ist, das andererseits im erforderlichen Maße flexibel ist und das gleichzeitig der Dämpfung auftretender Schwingungs- und Druckpulsationsbelastungen dient.

Ein gattungsgemäßes Leitungselement ist aus der DE 199 19 715 A1 bekannt.

Von diesem Stand der Technik ausgehend liegt der vorliegenden Erfindung die Aufgabe zugrunde, ein flexibles Leitungselement für CO₂-Klimaanlagen, also für hohe Innendrücke, zur Verfügung zu stellen, das bei einfacherem Aufbau dennoch bei großer Lebensdauer die beschriebenen vorteilhaften Funktionen des bekannten Leitungselements mit sich bringt.

Diese Aufgabe wird erfindungsgemäß dadurch gelöst, dass der Geflechtsschlauch so ausgelegt ist, dass die axiale Längung des Leitungselementes im innendruckbeaufschlagten Betriebszustand bei 200 bar verglichen mit dem Ausgangszustand bei Normaldruck weniger als 0,8 % und insbesondere weniger als 0,5 % beträgt.

Natürlich ist es im Stand der Technik bekannt, Geflechtsschläuche als Axialabstützungselemente vorzusehen; jedoch ist es bisher nicht möglich, solch hohe Belastungen, wie sie bei CO₂-Klimaanlagen herrschen, also Innendrücke von bis zu 200 bar allein mit Hilfe eines Geflechtsschlauches abzufangen, da dieser bei herkömmlicher Dimensionierung und ohne zusätzliche Maßnahmen wie Kunststoffurnhollungen, doppelte Umflechtung, overstressing etc. nicht dazu in der Lage ist, die üblicherweise auftretenden Druckwechselbelastungen, Biegungen in der Z-Achse (also in Querrichtung) etc. über eine längere Lebensdauer zerstörungsfrei aufzunehmen.

Dadurch dass man dem Geflechtsschlauch nun erfindungsgemäß eine ihm eigene wesentliche charakteristische Eigenschaft nimmt, nämlich die Möglichkeit, einerseits zwar als Axialabstützungselement zu dienen, diese Axialabstützung aber nicht ansatzlos, sondern progressiv nach einer gewissen axialen Längung durchzuführen (wobei die übliche axiale Längung in der Größenordnung zwischen 1, 5 und 3 % liegt), erhöht man in überraschender Weise seine Fähigkeit, Druckwechselbelastungen und Biegungen in der Z-Achse unter Innendruck von bis zu 200 bar über eine lange Zeitdauer zerstörungsfrei aufzunehmen. Hierdurch ist es erstmals möglich, den Geflechtsschlauch ganz ohne Zusatzbauteile als Axialabstützungselement in CO₂-Klimaanlagen zu verwenden, so dass der Geflechtsschlauch dann zumindest in Teilbereichen spielfrei am Wellschlauch auf dessen radialer Außenseite anliegt. Besteht somit das flexible Leitungselement nur noch aus Wellschlauch und Geflechtsschlauch, so ist - trotz der sehr hohen Innendrücke - ein nicht mehr zu unterbietender einfacher Aufbau gegeben, der dementsprechend auch die Heistellungskosten des Leitungselements verglichen mit bisherigen Lösungsformen drastisch reduziert.

Die geringe axiale Längung des mit dem Wellschlauch versehenen Geflechtsschlauches bedeutet gleichzeitig, dass die Biegesteifigkeit des so aufgebauten flexiblen Leitungselementes relativ gering ausfallen muss und demgemäß die Angularfederrate in der Größenordnung von nur einigen N/mm² liegt, beispielsweise bezogen auf ein Leitungselement mit einer Nennweite von 6 mm und einer axialen Länge von 100 mm in der Größenordnung von 5 N/mm².

Die drastisch reduzierte axiale Längung des Leitungselementes lässt sich insbesondere dadurch erzielen, dass der Geflechtsschlauch schon im Ausgangszustand unter Vorspannung zumindest mittelbar an der Außenseite des Wellschlauchs anliegt und/oder dass der Geflechtsschlauch so mit dem Wellschlauch und/oder den Anschlussteilen verbunden ist, dass der Wellschlauch vom Geflechtsschlauch unter axialer Vorspannung im Ausgangszustand gehalten ist. Hierbei wird der Wellschlauch beim Zusammenbauen axial gegenüber seinem Normalzustand gekürzt und der Geflechtsschlauch axial gelängt., So hat der Geflechtsschlauch die zuvor erwähnte ihm eigene axiale Längung, die dadurch verursacht wird, dass er seine Axialabstützungsfunktion nicht ansatzlos erfüllt, bereits im Ausgangszustand zu einem großen Teil zurückgelegt; das heißt also, dass im vorliegenden Fall der Ausgangszustand einem Zustand entspricht, der kurz vor Erreichen des so genannten Geflechtsanschlags liegt, in dem der Geflechtsschlauch tatsächlich nahezu ansatzlos seine Axialabstützungsfunktion gewährleistet.

Die erfindungsgemäße extrem geringe axiale Längung des Leitungselements lässt sich auf der anderen Seite aber auch dadurch erzielen, dass man den Geflechtsschlauch mit einer extrem steilen Steigung ausführt und ihm so seine axiale Nachgiebigkeit nimmt. Beispielsweise wird die Steigung des Geflechtsschlauchs so ausgeführt, dass die Schlaglänge - bezogen auf ein Leitungselement mit einer Nennweite von 6 mm - in der Größenordnung von mehr als 60 mm liegt. Eine solch extreme Steigung hat ebenfalls zum Effekt, dass sich der Geflechtswinkel selbst bei axialen Zugbelastungen kaum weiter reduzieren lässt und hierdurch die axiale Längung nur noch in der angestrebten Größenordnung von weniger als 0,8 % und insbesondere weniger als 0,5 % liegen kann, was bei einem beispielhaften Leitungselement mit einer Gesamtlänge von 100 mm eine absolute Längung von maximal 1,5 mm bedeutet.

Neben dem Flechtwinkel können aber auch die Drahtstärke und der Bedeckungsgrad des Geflechtsschlauchs so eingestellt werden, dass die gewünschte maximale Längung des Leitungselements erhalten wird.

Was den Wellschlauch betrifft, so sollte dieser zum einen kältemitteldicht ausgeführt sein und zum anderen aus einem Ringwellschlauch bestehen. Selbst wenn sich der Metallschlauch nur kaum axial längt, so wird durch eine Ringwellung eine bei wendelförmig gewellten Schlauchleitungen bei Längung auftretende Torsion vermieden. Aber auch bezüglich des Wellschlauchs ist es möglich, durch geeignete Maßnahmen wie z.B. Anpassen der Wellengeometrie und/oder der Wandstärke die gewünschte maximale Längung des Leitungselements einzustellen.

Schließlich kann auch zwischen Wellschlauch und Axialabstützungselement in an sich bekannter Weise eine Elastomerlage angeordnet sein, die durch Wahl einer geeigneten Dicke, eines geeigneten Werkstoffs und einer geeigneten Shore-Härte zur gewünschten Begrenzung der maximalen Längung des Leitungselements beitragen kann.

In gleicher Weise führen ausgewählte geeignete Montagemaßnahmen (wie stoffschlüssiges Fügen oder der bereits erwähnten Aufbringung einer Vorspannung) oder Nachbehandlungsmaßnahmen (wie ein mechanisches Recken, ein Aufbringen von Innendruck und/oder eine Wärmeauslagerung) zu der gewünschten Längungsbegrenzung.

Weitere Merkmale und Vorteile der vorliegenden Erfindung ergeben sich aus den Unteransprüchen sowie aus der nachfolgenden Beschreibung eines Ausführungsbeispiels anhand der Zeichnung; hierbei zeigen
- Figur 1: ein erfindungsgemäßes flexibles Leitungselement in geschnittener Seitenansicht;
- Figur 2: ein Diagramm über den Zusammenhang zwischen Schlaglänge (in mm) einerseits und Längung (in %) bei Innendruck (von 225 bar) an- dererseits; und
- Figur 3: ein Diagramm über den Zusammenhang zwischen Längung (in %) bei Innendruck (von 225 bar) einerseits und Lastspielzahl anderer- seits.

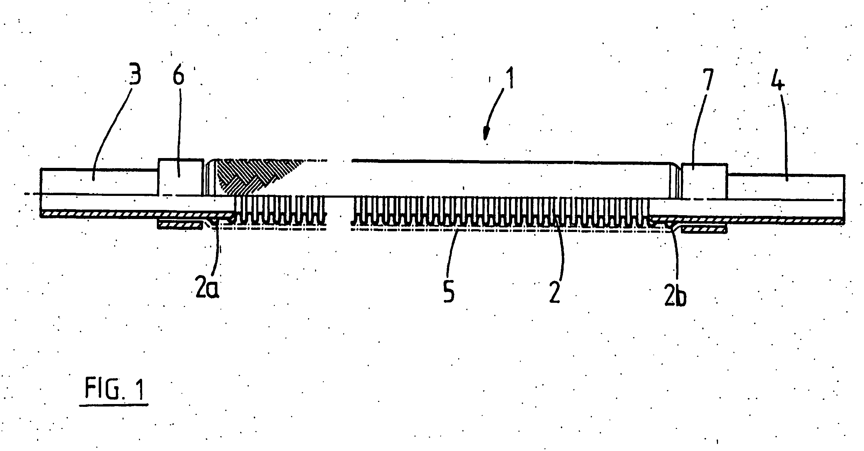

Das in Figur 1 gezeigte Leitungselement 1 besteht aus einem ringgewellten Metallschlauch 2, der an seinen axialen Enden mit rohrförmigen Anschlussteilen 3, 4 überlappend angeordnet und verschweißt ist, die zur Verbindung mit weiterführenden (in Figur 1 nicht dargestellten) Bauteilen dienen. Koaxial zum Metallschlauch 2 ist ein Axialabstützungselement in Form eines Geflechtsschlauchs 5 angeordnet und über Endringe 6, 7 an den Anschlussteilen über weitere Schweißverbindungen 3, 4 festgelegt.

Die Anschlussteile 3, 4 weisen einen Außendurchmesser auf, der etwa dem neutralen (mittleren) Wellschlauchdurchmesser entspricht, also geringer ausfällt, als der lichte Außendurchmesser des Metallschlauchs 2; demgemäß ist der Geflechtsschlauch von einer spielfrei an den Außenkrempen des Metallschlauchs 2 anliegenden (axialen) Erstreckung jeweils nach der endständigen Außenkrempe 2a, 2b des Metallschlauchs 2 radial nach innen auf das Außendurchmesserniveau der Anschlussteile 3, 4 gezogen und dort mittels der Endringe 6, 7 festgelegt. Die genannten endständigen Außenkrempen 2a, 2b dienen als Radialabstützungselement bei der Umlenkung des Geflechtsschlauchs von dem größeren Außendurchmesser der Wellschlauchaußenkrempen auf den kleineren Außendurchmesser der Anschlussteile. Dadurch, dass die endständigen Außenkrempen 2a, 2b durch die Anschlussteile 3, 4 auf ihrer radialen Innenseite unterstützt sind, können sie die radiale Belastung beim Abstützen des Geflechtsschlauchs problemlos aufnehmen, insbesondere dann, wenn sie benachbart zu einer Schweißverbindung zwischen Metallschlauch und Anschlussteilen liegen und somit nahezu keine Flexibilität mehr aufweisen.

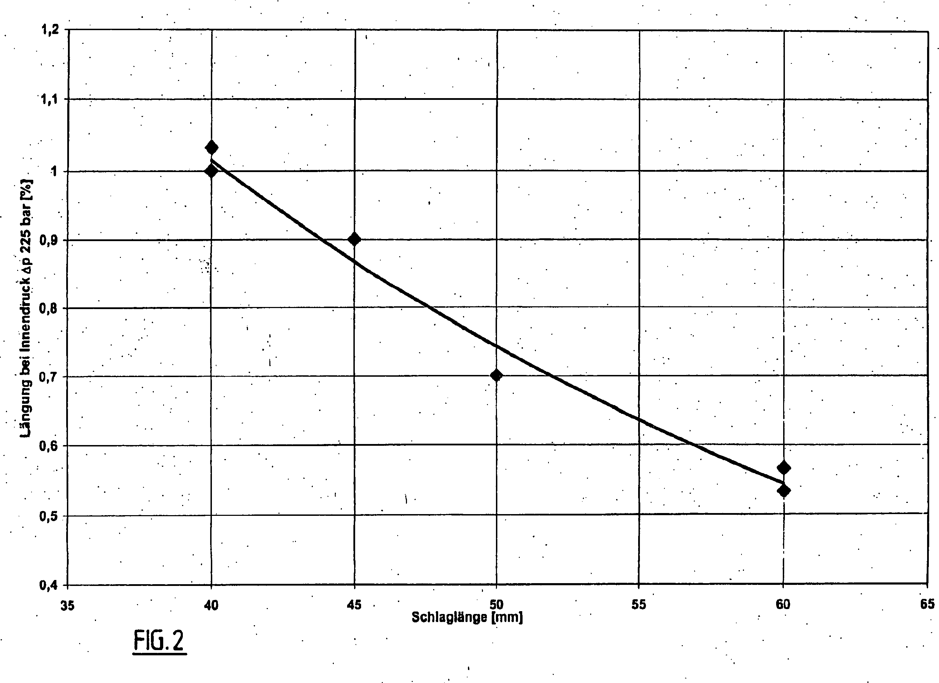

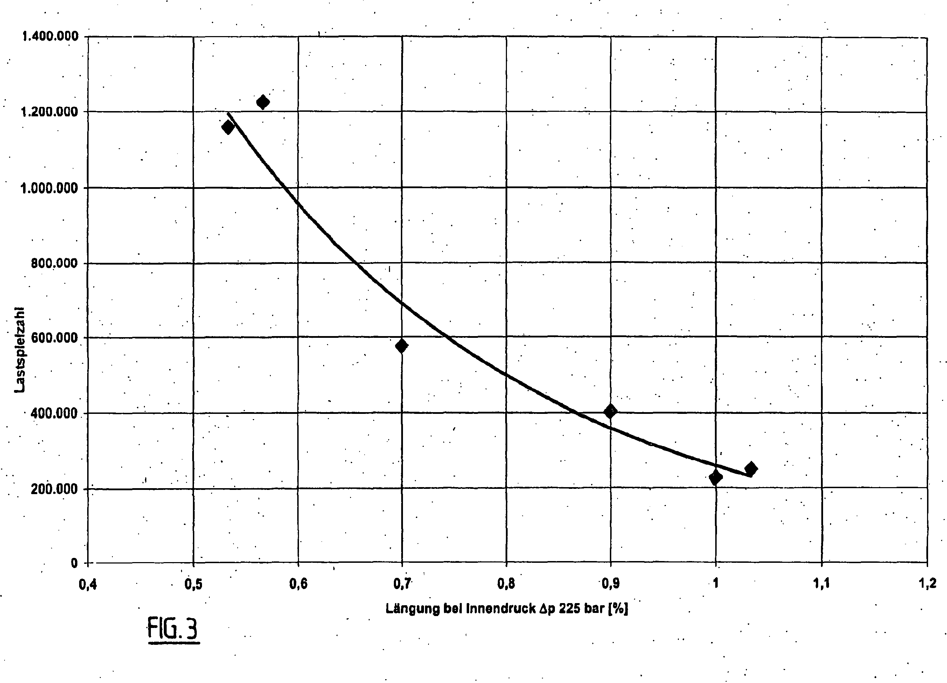

Über die erfindungswesentlichen Eigenschaften des Leitungselementes 1, wie insbesondere axiale Längung, Angularfederrate, Schlaglänge etc. lässt sich aus Figur 1 nichts entnehmen, da diese nur den prinzipiellen Aufbau des Leitungselementes zeigt. Die erfindungswesentlichen Zusammenhänge ergeben sich aber aus den nachfolgenden Diagrammen der Figuren 2 und 3, die die durch praktische Versuche nachgewiesenen Zusammenhänge zwischen Schlaglänge und Längung bei Innendruck einerseits bzw. Längung bei Innendruck und Lastspielzahl andererseits aufzeigen:

In Figur 2 ist die Schlaglänge (in mm) verschiedener Geflechtsschlauchauslegungen auf der X-Achse des Diagramms aufgetragen, während auf der Y-Achse eine sich daraus ergebende prozentuale Längung eines mit der zugehörigen Geflechtsschlauch - Schlaglänge ausgestatteten Leitungselements aufgetragen ist. In Figur 2 sieht man, dass je höher die Schlaglänge ist, desto geringer die axiale Längung ausfällt. Diese Erkenntnis hat zunächst einmal noch keine besondere Bedeutung für die Belastbarkeit eines so ausgebildeten Leitungselementes. Sieht man sich nun aber die Zusammenhänge zwischen axialer Längung (in %, auf der X-Achse) und Lastspielzahl (Y-Achse) in Figur 3 an, so kann man unschwer erkennen, dass eine geringere axiale Längung überraschenderweise zu einer extremen Erhöhung der Lastspielzahl, also der Haltbarkeit bzw. Lebensdauer eines entsprechenden Leitungselementes führt.

In diesem Zusammenhang sei noch einmal darauf hingewiesen, dass Standardgeflechte eine axiale Längung in der Größenordnung zwischen 1,5 und 3 % aufweisen. Betrachtet man sich Figur 3, so kann man unschwer erkennen, welch drastischen Unterschied die Reduzierung der maximalen axialen Längung hinsichtlich der Lebensdauer bedeutet.

Die praktischen Untersuchungen untermauern somit die der vorliegenden Erfindung zugrunde liegenden Erkenntnisse: Je größer die Schlaglänge - bzw. die Vorspannung zwischen Geflechtsschlauch und Metallschlauch -, desto geringer die axiale Längung und desto höher die Lebensdauer. Mit anderen Worten heißt dies zusammenfassend, dass unabhängig davon, wie man die axiale Längung in einer Größenordnung von lediglich 0,8 % bzw. von vorzugsweise nur 0,5 % erhält, man die Lebensdauer eines entsprechenden Leitungselementes hierdurch entsprechend deutlich erhöht. Und zusätzlich wird durch ein solches aus lediglich Metallschlauch und Geflechtsschlauch bestehendes Leitungselement auch der Herstellungsaufwand deutlich reduziert verglichen mit den üblicherweise sonst bei CO₂-Klimaanlagen verwendeten flexiblen Leitungselementen.

## Patentansprüche

1. Flexibles Leitungselement (1) für innendruckbeaufschlagte Leitungen, insbesondere für mit CO₂ betriebene Klimaanlagen von Kraftfahrzeugen, wobei das Leitungselement (1) für Innendrücke in der Größenordnung von 200 bar ausgelegt ist, und wobei das Leitungselement (1) an beiden Enden mit Anschlussteilen (3, 4) zur Verbindung mit weiterführenden Bauteilen versehen ist, wobei das Leitungselement (1) einen inneren fluiddichten und mit Anschlussteilen (3, 4) versehenen Wellschlauch (2) aus Metall aufweist und wobei der Wellschlauch (2) zumindest mittelbar mit einem Axialabstützungselement (5) zusammenwirkt, wobei das Axialabstützungselement (5) aus einem flexiblen Geflechtsschlauch aus sich kreuzenden Metalldrähten besteht, der an den Anschlussteilen (3, 4) festgelegt ist und koaxial zum Wellschlauch (2) auf dessen radialer Außenseite verläuft, und wobei der Geflechtsschlauch (5) zumindest in Teilbereichen spielfrei am Wellschlauch (2) auf dessen radialer Außenseite anliegt, **dadurch gekennzeichnet,**
**dass** der Geflechtsschlauch (5) so ausgelegt ist, dass die axiale Längung des Leitungselements (1) im innendruckbeaufschlagten Betriebszustand bei 200 bar verglichen mit dem Ausgangszustand bei Normaldruck weniger als 0,8 % und insbesondere weniger als 0,5 % beträgt.

2. Flexibles Leitungselement nach Anspruch 1,
**dadurch gekennzeichnet,**
**dass** der Geflechtsschlauch (5) schon im Ausgangszustand unter Vorspannung zumindest mittelbar an der radialen Außenseite des Wellschlauchs (2) anliegt.

3. Flexibles Leitungselement nach Anspruch 1 oder 2,
**dadurch gekennzeichnet,**
**dass** der Geflechtsschlauch (5) so mit dem Wellschlauch (2) und/oder den Anschlussteilen (3, 4) verbunden ist, dass der Wellschlauch (2) vom Geflechtsschlauch (5) unter axialer Vorspannung im Ausgangszustand gehalten ist.

4. Flexibles Leitungselement nach zumindest einem der vorstehenden Ansprüche,
**dadurch gekennzeichnet,**
**dass** der Geflechtsschlauch (5) so ausgelegt ist, dass die als Angularfederrate definierte Biegesteifigkeit in der Größenordnung von einigen N/mm² liegt.

5. Flexibles Leitungselement nach zumindest Anspruch 4,
**dadurch gekennzeichnet,**
**dass** die Angularfederrate - bezogen auf ein Leitungselement (1) mit einer Nennweite von 6 mm und einer axialen Länge von 100 mm - in der Größenordnung von 5 N/mm² liegt.

6. Flexibles Leitungselement nach zumindest einem der vorstehenden Ansprüche,
**dadurch gekennzeichnet,**
**dass** der Geflechtsschlauch (5) mit einer steilen Steigung ausgeführt ist.

7. Flexibles Leitungselement nach zumindest Anspruch 6,
**dadurch gekennzeichnet,**
**dass** die Steigung des Geflechtsschlauchs (5) so ausgeführt ist, dass die Schlaglänge - bezogen auf ein Leitungselement (1) mit einer Nennweite von 6 mm - in der Größenordnung von mehr als 60 mm liegt.

8. Flexibles Leitungselement nach zumindest einem der vorstehenden Ansprüche,
**dadurch gekennzeichnet,**
**dass** der Wellschlauch (2) kältemitteldicht ausgeführt und/oder ein Ringwellschlauch ist.

9. Flexibles Leitungselement nach zumindest einem der vorstehenden Ansprüche,
**dadurch gekennzeichnet,**
**dass** die maximale axiale Längung des Leitungselements (1) von 0,8 % durch geeignete Auslegung des Geflechtsschlauchs (5) hinsichtlich Drahtstärke, Flechtwinkel und/oder Bedeckungsgrad einstellbar ist.

10. Flexibles Leitungselement nach zumindest einem der vorstehenden Ansprüche,
**dadurch gekennzeichnet,**
**dass** zwischen Wellschlauch und Axialabstützungselement eine Elastomerlage angeordnet ist und dass die maximale axiale Längung des Leitungselements (1) von 0,8 % durch geeignete Auslegung der Elastomerlage hinsichtlich Dicke, Werkstoff und/oder Shore-Härte einstellbar ist.

11. Flexibles Leitungselement nach zumindest einem der vorstehenden Ansprüche,
**dadurch gekennzeichnet,**
**dass** die maximale axiale Längung des Leitungselements (1) von 0,8 % durch geeignete Auslegung des Metallschlauchs (2) hinsichtlich Wellengeometrie und/oder Wandstärke einstellbar ist.

12. Flexibles Leitungselement nach zumindest einem der vorstehenden Ansprüche,
**dadurch gekennzeichnet,**
**dass** die maximale axiale Längung des Leitungselements (1) von 0,8 % durch geeignete Maßnahmen beim Montieren des Leitungselements, wie durch stoffschlüssiges Fügen oder durch Aufbringen einer Vorspannung einstellbar ist.

13. Flexibles Leitungselement nach zumindest einem der vorstehenden Ansprüche,
**dadurch gekennzeichnet,**
**dass** die maximale axiale Längung des Leitungselements (1) von 0,8 % durch geeignete Nachbehandlungsmaßnahmen des Leitungselements, wie mechanisches Recken, Aufbringen von Innendruck und/oder Wärmeauslagerung einstellbar ist.

## Claims

1. Flexible duct element (1) for ducts that are acted upon by internal pressure, especially for CO₂-operated air-conditioning systems of motor vehicles, the duct element (1) being configured for internal pressures of the order of 200 bar, and the duct element (1) being provided at both ends with attachment parts (3, 4) for connection to further components, the duct element (1) having an inner fluid-tight corrugated metal hose (2) provided with attachment parts (3, 4) and the corrugated hose (2) co-operating at least indirectly with an axial support element (5), the axial support element (5) consisting of a flexible braided hose made of crossing metal wires, which hose is fixed in place at the attachment points (3, 4) and runs coaxially with respect to the corrugated hose (2) on the radial outer side thereof, and the braided hose (5), at least in sub-regions, resting without play against the corrugated hose (2) on the radial outer side thereof, **characterised in that**
the braided hose (5) is so configured that in the operating state in which the duct element (1) is acted upon by internal pressure the axial elongation thereof at 200 bar compared with the initial state at normal pressure is less than 0.8 % and especially less than 0.5 %.

2. Flexible duct element according to claim 1,
**characterised in that**
the braided hose (5) in the initial state already rests under bias at least indirectly against the radial outer side of the corrugated hose (2).

3. Flexible duct element according to claim 1 or 2,
**characterised in that**
the braided hose (5) is connected to the corrugated hose (2) and/or to the attachment parts (3, 4) in such a way that in the initial state the corrugated hose (2) is held under axial bias by the braided hose (5).

4. Flexible duct element according to at least one of the preceding claims, **characterised in that**
the braided hose (5) is configured in such a way that the flexural strength, defined as the angular spring rate, is of the order of a few N/mm².

5. Flexible duct element according to at least claim 4,
**characterised in that**
the angular spring rate - based on a duct element (1) having a nominal width of 6 mm and an axial length of 100 mm - is of the order of 5 N/mm².

6. Flexible duct element according to at least one of the preceding claims,
**characterised in that**
the braided hose (5) is implemented with a steep pitch.

7. Flexible duct element according to at least claim 6,
**characterised in that**
the pitch of the braided hose (5) is such that the lay length - based on a duct element (1) having a nominal width of 6 mm - is of the order of more than 60 mm.

8. Flexible duct element according to at least one of the preceding claims,
**characterised in that**
the corrugated hose (2) is of coolant-tight construction and/or is an annularly corrugated hose.

9. Flexible duct element according to at least one of the preceding claims,
**characterised in that**
the maximum axial elongation of the duct element (1) of 0.8 % is establishable by suitable configuration of the braided hose (5) in respect of wire thickness, braiding angle and/or degree of coverage.

10. Flexible duct element according to at least one of the preceding claims,
**characterised in that**
an elastomer layer is arranged between corrugated hose and axial support element and the maximum axial elongation of the duct element (1) of 0.8 % is establishable by suitable configuration of the elastomer layer in respect of thickness, material and/or Shore hardness.

11. Flexible duct element according to at least one of the preceding claims,
**characterised in that**
the maximum axial elongation of the duct element (1) of 0.8 % is establishable by suitable configuration of the metal hose (2) in respect of corrugation geometry and/or wall thickness.

12. Flexible duct element according to at least one of the preceding claims,
**characterised in that**
the maximum axial elongation of the duct element (1) of 0.8 % is establishable by means of suitable measures during mounting of the duct element, such as by means of material-bonded joining or by application of a bias.

13. Flexible duct element according to at least one of the preceding claims,
**characterised in that**
the maximum axial elongation of the duct element (1) of 0.8 % is establishable by subjection of the duct element to suitable after-treatment measures, such as mechanical stretching, application of internal pressure and/or thermal treatment.

## Revendications

1. Elément de conduite flexible (1) destiné à des conduites sollicitées par une pression interne, en particulier pour installations de climatisation de véhicules automobiles actionnées par CO₂, ledit élément de conduite (1) étant conçu pour des pressions internes de l'ordre de 200 bar, et ledit élément de conduite (1) étant pourvu, aux deux extrémités, de pièces de raccordement (3, 4) pour la liaison avec des pièces structurelles situées dans la continuité, l'élément de conduite (1) comportant un tuyau souple ondulé (2) en métal, étanche aux fluides et muni de pièces de raccordement (3, 4), et ledit tuyau souple ondulé (2) coopérant au moins indirectement avec un élément d'appui axial (5), lequel élément d'appui axial (5) se présente comme un flexible tressé constitué par des fils métalliques s'entrecroisant, qui est bloqué à demeure sur les pièces de raccordement (3, 4) et s'étend coaxialement audit tuyau souple ondulé (2), sur la face extérieure radiale de ce dernier, et ledit flexible tressé (5) étant en applique sur ledit tuyau souple ondulé (2) avec absence de jeu, au moins dans des régions partielles, sur la face extérieure radiale dudit tuyau,
**caractérisé par le fait**
**que** le flexible tressé (5) est conçu de façon telle que l'allongement axial de l'élément de conduite (1) représente moins de 0,8 %, et notamment moins de 0,5 % à l'état de service sollicité par une pression interne avoisinant 200 bar, comparativement à l'état initial sous pression normale.

2. Elément de conduite flexible selon la revendication 1,
**caractérisé par le fait**
**que** le flexible tressé (5) porte dès l'état initial, avec précontrainte, au moins indirectement contre la face extérieure radiale du tuyau souple ondulé (2).

3. Elément de conduite flexible selon la revendication 1 ou 2,
**caractérisé par le fait**
**que** le flexible tressé (5) est relié au tuyau souple ondulé (2), et/ou aux pièces de raccordement (3, 4), de telle manière que ledit tuyau souple ondulé (2) soit retenu par ledit flexible tressé (5), à l'état initial, avec précontrainte axiale.

4. Elément de conduite flexible selon au moins l'une des revendications précédentes,
**caractérisé par le fait**
**que** le flexible tressé (5) est conçu de façon telle que la rigidité à la flexion, définie comme constante de rappel angulaire, soit de l'ordre de quelques N/mm².

5. Elément de conduite flexible selon au moins la revendication 4,
**caractérisé par le fait**
**que** la constante de rappel angulaire est de l'ordre de 5 N/mm² - rapportée à un élément de conduite (1) présentant un diamètre nominal de passage de 6 mm et une longueur axiale de 100 mm-.

6. Elément de conduite flexible selon au moins l'une des revendications précédentes,
**caractérisé par le fait**
**que** le flexible tressé (5) offre une réalisation à pas accentué.

7. Elément de conduite flexible selon au moins la revendication 6,
**caractérisé par le fait**
**que** le pas du flexible tressé (5) est conçu de façon telle que la longueur de commettage soit de l'ordre excédant 60 mm - rapportée à un élément de conduite (1) présentant un diamètre nominal de passage de 6 mm -.

8. Elément de conduite flexible selon au moins l'une des revendications précédentes,
**caractérisé par le fait**
**que** le tuyau souple ondulé (2) est de réalisation étanche aux agents caloporteurs, et/ou se présente comme un tuyau souple annelé.

9. Elément de conduite flexible selon au moins l'une des revendications précédentes,
**caractérisé par le fait**
**que** l'allongement axial maximal dudit élément de conduite (1), de 0,8 %, peut être réglé grâce à une conception adéquate du flexible tressé (5) concernant l'épaisseur des fils métalliques, l'angle de tressage et/ou le degré de recouvrement.

10. Elément de conduite flexible selon au moins l'une des revendications précédentes,
**caractérisé par le fait**
**qu'**une couche d'élastomère est interposée entre le tuyau souple ondulé et l'élément d'appui axial ; et par le fait que l'allongement axial maximal dudit élément de conduite (1), de 0,8 %, peut être réglé grâce à une conception adéquate de ladite couche d'élastomère concernant l'épaisseur, le matériau et/ou la dureté Shore.

11. Elément de conduite flexible selon au moins l'une des revendications précédentes,
**caractérisé par le fait**
**que** l'allongement axial maximal dudit élément de conduite (1), de 0,8 %, peut être réglé grâce à une conception adéquate du tuyau souple métallique (2) concernant la géométrie des ondulations et/ou l'épaisseur de la paroi.

12. Elément de conduite flexible selon au moins l'une des revendications précédentes,
**caractérisé par le fait**
**que** l'allongement axial maximal dudit élément de conduite (1), de 0,8 %, peut être réglé grâce à des dispositions adéquates prises lors du montage dudit élément de conduite, telles qu'un assemblage matériel ou l'imposition d'une précontrainte.

13. Elément de conduite flexible selon au moins l'une des revendications précédentes,
**caractérisé par le fait**
**que** l'allongement axial maximal dudit élément de conduite (1), de 0,8 %, peut être réglé grâce à des mesures adéquates de traitement ultérieur dudit élément de conduite, telles qu'un étirage mécanique, l'imposition d'une pression interne et/ou un vieillissement thermique.
